# EUROPÄISCHE PATENTSCHRIFT

(11) **EP 3 019 349 B1**
(45) Veröffentlichungstag und Bekanntmachung des Hinweises auf die Patenterteilung: **10.07.2019**
(21) Anmeldenummer: 14716826.4
(22) Anmeldetag: 11.04.2014
(51) Int. Cl.: B60C 11/12

(54) **LAUFSTREIFENPROFIL EINES FAHRZEUGLUFTREIFENS**
TREAD PROFILE OF A PNEUMATIC VEHICLE TIRE
PROFIL DE BANDE DE ROULEMENT D'UN PNEU DE VÉHICULE

(30) Priorität: 11.07.2013 DE 102013107349
(43) Veröffentlichungstag der Anmeldung: 18.05.2016
(73) Patentinhaber: Continental Reifen Deutschland GmbH, 30165 Hannover (DE)
(72) Erfinder: RITTWEGER, Stefan, 30163 Hannover (DE); STADLER, Frank, 31275 Lehrte (DE)
(74) Vertreter: Finger, Karsten
(86) Internationale Anmeldenummer: PCT/EP2014/057335
(87) Internationale Veröffentlichungsnummer: WO 2015/003826

(56) Entgegenhaltungen:
- EP-A2- 0 713 790
- EP-A2- 0 847 878
- FR-A1- 2 924 981

## Beschreibung

Die Erfindung betrifft ein Laufstreifenprofil eines Fahrzeugluftreifens mit radial erhabenen Profilelementen, die in radialer Richtung R des Reifens von einer die Bodenkontaktoberfläche bildenden, **radial äußeren** Oberfläche begrenzt werden, und mit in Profilelementen ausgebildeten wellenförmig- oder zickzackförmig verlaufenden Feineinschnitten mit einer in der radial äußeren Oberfläche die Haupterstreckungsrichtung des jeweiligen Feineinschnitts bildenden Nulllinie der Wellen- bzw. Zickzackform, deren größte Richtungskomponente die axiale Richtung A des Reifens ist, wobei die Wellenform bzw. Zickzackform längs der Erstreckung der Nulllinie in alternierender Abfolge angeordnet ausgebildete Berge und Täler mit Amplitude a aufweist, und wobei die Feineinschnitte zumindest längs ihrer Wellen- oder Zickzackförmigen Erstreckung mit einer in radialer Richtung R gemessenen Tiefe T₁ ausgebildet sind.

Derartige Fahrzeugluftreifen sind bekannt. Für Winterreifen ist es bekannt zur Erzielung guter Schneeeigenschaften eine Profilstruktur auszubilden, die möglichst viele Griffkanten aufweist. Üblicher Weise werden aus diesem Grund bei Winterreifen Feineinschnitte in den Profilblöcken ausgebildet, deren Haupterstreckungsrichtung im Wesentlichen in axialer Richtung A des Reifens ausgerichtet sind, wodurch Griffkanten zur Erzielung guter Traktions- und Bremseigenschaften auf Schnee gebildet werden. Zur Erzielung guter Schneehandlingeigenschaften ist es wünschenswert zusätzliche umfangsorientierte Kanten im Profil auszubilden. Gute Winterreifen benötigen beides. Allerdings ist zur Erzielung guter Trockeneigenschaften eine hohe Steifigkeit der Profilblockelemente wünschenswert. Damit die Profilblockelementsteifigkeit zur Erzielung guter Trockeneigenschaften (Bremsen, Handling, Traktion) aufrechterhalten werden kann, ist jedoch die Ausbildung tiefer Feineinschnitte im Profilblockelement beschränkt.

Zur Erzielung wirksamer umfangsorientierter Kanten bei gleichzeitiger Sicherstellung gewünschter Mindeststeifigkeit werden die in axialer Richtung A ausgericheten Feineinschnitte häufig wellenförmig oder zickzackförmig längs ihrer Haupterstreckungsrichtung erstreckt ausgebildet. Hierdurch lassen sich lange wirksame Griffkanten ausbilden, die große Griffwirkung zur Erzielung guter Schneebrems- und Schneetraktionseigenschaften sicherstellen bei guten Schneehandlingeigenschaften. Nur mit Hilfe von wellen- oder zickzackförmigen in axialer Richtung A ausgerichteten Feineinschnitten ist jedoch die wirksame Kantenlänge von in Umfangsrichtung U gerichteten Kanten und somit die Schneehandlingsfähigkeit noch beschränkt.

Darüber hinaus ist es bekannt, bei Winterreifen mit in axialer Richtung A erstreckten Feineinschnitten zusätzliche rein oberflächlich ausgebildete umfangsorientierte Kanten in Form von umfangsorientierten Nuten im Profilblockelement auszubilden. Derartig oberflächlich ausgebildete umfangsorientierte Nuten begrenzen zwar den Steifigkeitsverlust des Profilblockelementes und ermöglichen somit gute Trockeneigenschaften. Allerdings ist deren Schneegriffwirkung noch beschränkt.

**Aus der** FR 2924981 A1 **ist ein Laufstreifenprofil eines Fahrzeugluftreifens gemäß den Merkmalen des Oberbegriffs von Anspruch 1 bekannt.**

Der Erfindung liegt die Aufgabe zugrunde, bei derartigen Laufstreifenprofilen von Fahrzeugluftreifen gute Trocken-Eigenschaften mit verbesserten Schnee-HandlingEigenschaften zu ermöglichen.

Die Aufgabe wird erfindungsgemäß durch die Ausbildung eines Laufstreifenprofils eines Fahrzeugluftreifens mit radial erhabenen Profilelementen , die in radialer Richtung R des Reifens von einer die Bodenkontaktoberfläche bildenden **radial äußeren** Oberfläche begrenzt werden, und mit in Profilelementen ausgebildeten wellenförmig- oder zickzackförmig verlaufenden Feineinschnitten mit einer in der radial äußeren Oberfläche die Haupterstreckungsrichtung des jeweiligen Feineinschnitts bildenden Nulllinie der Wellen- bzw. Zickzackform, deren größte Richtungskomponente die axiale Richtung A des Reifens ist, wobei die Wellenform bzw. Zickzackform längs der Erstreckung der Nulllinie in alternierender Abfolge angeordnet ausgebildete Berge und Täler mit Amplitude a aufweist, und wobei die Feineinschnitte zumindest längs ihrer Wellen- oder Zickzackförmigen Erstreckung mit einer in radialer Richtung R gemessenen Tiefe T₁ ausgebildet sind, gemäß den Merkmalen von Anspruch 1 gelöst, bei dem im Erstreckungsbereich zumindest einzelner - insbesondere aller -Wellenberge und/oder zumindest einzelner - insbesondere aller -Wellentäler des Feineinschnitts jeweils ein vom Feineinschnitt begrenzter Profilabschnitt, der sich ausgehend Gipfel (Maximum) des Wellenberges bzw. vom Tiefpunkt (Minimum) des Wellentals in Richtung senkrecht zur Nullinie hin bis in den Abstand L₁ vom Gipfel (Maximum) des Wellenberges bzw. vom Tiefpunkt (Minimum) des Wellentals mit L₁≤a erstreckt, als Vertiefung mit längs der Erstreckung konstanter Tiefe T₂ - gemessen in radialer Richtung R ausgehend von der radial äußeren Oberfläche - mit T₂≤ T₁ (1/3) ausgebildet ist, **wobei die Vertiefung längs eines im Abstand L₁ vom Gipfel bzw. vom Tiefpunkt zwischen den beiden Schnittpunkten der im Abstand L₁ vom Gipfel bzw. vom Tiefpunkt gebildeten Geraden mit dem Feineinschnitt ausgebildeten Strecke der Länge B₁ mit 2mm ≤B₁≤ 10mm, stufenartig zur radial äußeren Oberfläche angehoben ist, und wobei längs der Strecke ausgehend von der Position der Strecke im Abstand L₁ vom Gipfel bzw. vom Tiefpunkt wenigstens eine senkrecht zur Strecke in der radial äußeren Oberfläche ausgerichtete und vom Gipfel bzw. vom Tiefpunkt wegweisend erstreckte Nut der Erstreckungslänge L₂ mit L₁≤L₂≤ (10L₁) ausgebildet ist, die in radialer Richtung nach innen hin von einem Nutgrund begrenzt ist, welcher längs der Erstreckung der Nut ausgehend von einer Tiefe T₂ in der Position der Strecke kontinuierlich bis zum Erstreckungsende rampenförmig radial ansteigend ausgebildet ist.**

Durch diese Ausbildung wird ermöglicht, dass die vorteilhafte Griffwirkung von wellen- oder zickzackförmigen Feineinschnitten mit ihrer sehr guten Schneegriffwirkung für hohe Traktions- und Bremskräfte als auch mit ihrem positiven Einfluss für Schneehandling bei gleichzeitig geringem Einfluss auf die Steifigkeit aufrechterhalten und deren Vorteile voll genutzt werden können. Die Ausbildung der Vertiefung des Profilelementmaterials im Bereich der Wellen von Wellenbergen bzw. Wellentälern ermöglicht eine zusätzliche Bildung einer Schneeaufnahmetasche im Oberflächenbereich zur Verbesserung der Schneegriffwirkung sowohl in axialer Richtung als auch in Umfangsrichtung und somit zur Verbesserung von Schneegriff bei Handling, Bremsen und Traktion. Die Aufnahmetasche verbessert die Griffwirkung der im Bereich des Berges bzw. Tales ausgebildeten Feineinschnittskanten bei Bildung einer zusätzlichen Griffkante im Übergang zwischen dem im Abstand L1 vom Gipfel ausgebildeten Anhebung zur radial äußeren Oberfläche und bei zusätzlicher erweiterter Schnee-Schnee-Griffwirkung zwischen dem in die durch die Vertiefung gebildete Tasche eingepressten Schnee und dem auf der Straßenoberfläche ausgebildeten Schnee. Somit lassen sich in einfacher Weise bei Aufrechterhaltung guter Trockengriffeigenschaften besonders gute Schneehandlingeigenschaften umsetzen.

Hierdurch kann **weiterhin** auch bei hoher Feineinschnittsdichte in einfacher Weise ein zuätzliches Einpressen und Verdichten des Schnees über die rampenförmige Nut und somit eine weiter verbesserte Schneetraktion auch über die Lebensdauer der Nut hinweg umgesetzt werden. Darüber hinaus ermöglicht die rampenförmige Ausbildung über die Lebensdauer der Nut hinweg eine gleichmäßige Veränderung der Nutlänge, wodurch das Abriebbild positiv beeinflusst wird.

Besonders vorteilhaft ist die Ausbildung eines Fahrzeugreifens gemäß den Merkmalen von Anspruch **2,** wobei längs der Strecke ausgehend von der Position der Strecke im Abstand L₁ vom Gipfel bzw. vom Tiefpunkt mehrere jeweils voneinander beabstandete senkrecht zur Strecke in der radial äußeren Oberfläche ausgerichtete und vom Gipfel bzw. vom Tiefpunkt wegweisend erstreckte Nuten ausgebildet sind. Hierdurch kann in besonders wirksamer Weise die die Schnee-Schnee-Reibung und somit die Schneetraktion verbessert werden.

Besonders vorteilhaft ist die Ausbildung eines Fahrzeugreifens gemäß den Merkmalen von Anspruch **3,** wobei der Nutgrund im Erstreckungsende der Nut die radial äußere Oberfläche schneidet. Hierdurch kann in besonders wirksamer Weise die die Schnee-Schnee-Reibung und somit die Schneetraktion weiter verbessert werden.

Besonders vorteilhaft ist die Ausbildung eines Fahrzeugreifens gemäß den Merkmalen von Anspruch **4,** wobei die Nut mit einer in der radial äußeren Oberfläche gemessenen Breite B₂ ausgebildet ist, die längs ihrer Erstreckung ausgehend von der Position der Strecke bis zum Erstreckungsende konstant ausgebildet ist. Hierdurch können in einfacher Weise die Aufnahme von Schnee weiter verbessert und zusätzliche längs der Erstreckung der Nut im Abstand von einander besonders wirksame Griffkanten für verbesserten Schneegriff erzeugt werden.

Besonders vorteilhaft ist die Ausbildung eines Fahrzeugreifens gemäß den Merkmalen von Anspruch **5,** wobei die Nut mit einer in der radial äußeren Oberfläche gemessenen Breite B₂ ausgebildet ist, die längs ihrer Erstreckung ausgehend von der Position der Strecke bis zum Erstreckungsende stetig - insbesondere kontinuierlich - abnehmend ausgebildet ist. Hierdurch kann in einfacher Weiseeine hohe Verdichtung des in die Nut eingepressten Schnees ermöglicht und die Schnee-Schnee-Reibung und somit die Schneetraktion verbessert werden.

Besonders vorteilhaft ist die Ausbildung eines Fahrzeugreifens gemäß den Merkmalen von Anspruch **6,** wobei die in der radial äußeren Oberfläche gemessene Breite B₂ der Nut mit B₂≤ (1/3)B₁ ausgebildet ist. Auf diese Weise kann sehr einfach trotz verdichtender Wirkung durch die Nut ausreichend wirksame Kontaktfläche zur Straßenoberfläche sichergestellt werden.

Besonders vorteilhaft ist die Ausbildung eines Fahrzeugreifens gemäß den Merkmalen von Anspruch **7,** wobei der Abstand L₁ mit 0,5mm≤L₁≤3mm ausgebildet ist. Hierdurch kann in einfacher Weise ein guter Kompromiss aus gutem Schneeaufnahme- und Verdichtung einerseits und großer Kontaktfläche zur Straße andererseits umgesetzt werden.

Die Erfindung wird im Folgenden an Hand der in den Figuren 1 bis 8 dargestellten Ausführungsbeispiele näher erläutert. Hierin zeigen
- Fig.1: eine Draufsicht auf ein Profilblockelement einer Profilblockreihe eines Laufstreifenprofils für Pkw-Reifen,
- Fig.2: das Detail II von Fig.1 in Draufsicht,
- Fig.3: das Profilblockelement von Fig.1 und Fig.2 in Schnittdarstellung gemäß Schnitt III-III von Fig.2,
- Fig.4: das Profilblockelement von Fig.1 und Fig.2 in Schnittdarstellung gemäß Schnitt IV-IV von Fig.1,
- Fig.5: einen Umfangsabschnitt eines Laufstreifenprofils eines Pkw-Reifens mit Profilblockelementen der Figuren 1 bis 4,
- Fig.6: eine Draufsicht auf einen Feineinschnitt des Profilblockelementes von Fig.1 in alternativer Ausführungsform,
- Fig.7: das Profilblockelement von Fig.6 in Schnittdarstellung gemäß Schnitt VII-VII von Fig.6 und
- Fig.8: eine Draufsicht auf einen Feineinschnitt von Fig.1 in alternativer Ausführungsform.

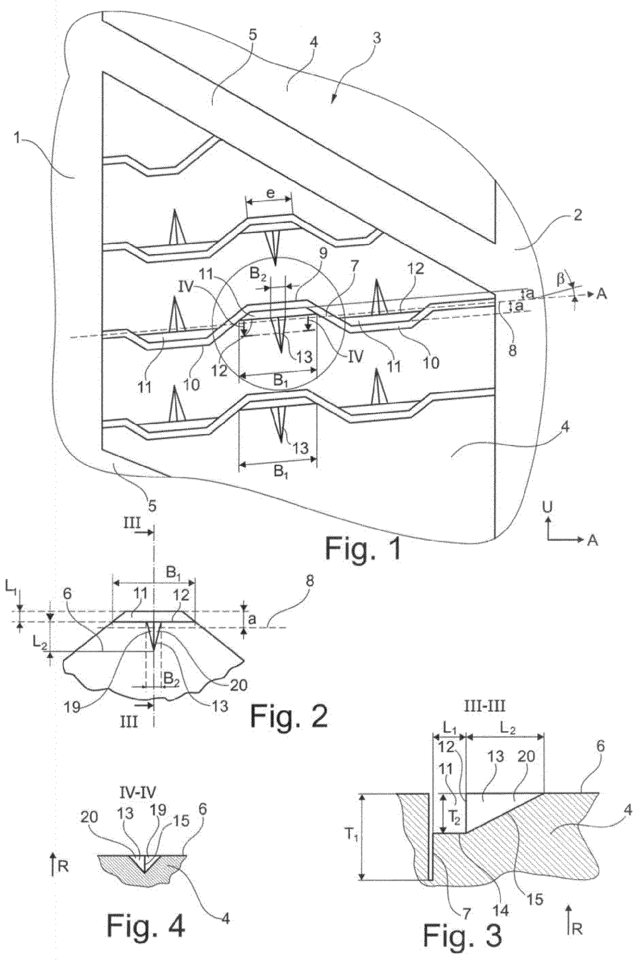

Die Figuren 1 bis 4 zeigen ein Profilblockelement 4 bekannter Art, welches Teil einer in einem Laufstreifenprofil eines Fahrzeugluftreifens in Umfangsrichtung U des Fahrzeugluftreifens ausgerichteten Profilblockreihe 3 ist. Die Profilblockreihe 3 ist in bekannter Weise aus in Umfangsrichtung U des Fahrzeugluftreifens hintereinander angeordneten und durch Querrillen 5 voneinander beabstandeten Profilblockelementen 4 ausgebildet. Die Profilblockreihe 3 und somit das Profilblockelement 4 ist in axialer Richtung A des Fahrzeugluftreifens zur einen - in Fig.1 zur linken - Seite hin durch eine über den gesamten Umfang des Fahrzeugluftreifens erstreckte und in Umfangsrichtung U ausgerichtete Umfangsrille 1 bekannter Art begrenzt und zur anderen - in Fig.1 zur rechten - Seite hin durch eine über den gesamten Umfang des Fahrzeugluftreifens erstreckte und in Umfangsrichtung U ausgerichtete Umfangsrille 2 bekannter Art begrenzt.

Die Profilblockelemente 4 der Profilblockreihe 3 sind in radialer Richtung R des Fahrzeugluftreifens nach außen hin durch eine die Straßenkontaktoberfläche bildende radial äußere Oberfläche 6 begrenzt, welche sich in axialer Richtung A ausgehend von der Umfangsrille 1 bis zur Umfangsrille 2 und in Umfangsrichtung 2 zwischen den beiden das Profilblockelement 4 begrenzenden Querrillen 5 erstreckt.

In der radial äußeren Oberfläche 6 des Profilblockelementes 4 sind mehrere in Umfangsrichtung U des Fahrzeugluftreifens hintereinander angeordnete Feineinschnitte 7 ausgebildet, welche sich in axialer Richtung A von der Umfangsrille 1 ausgehend durch das gesamte Profilblockelement bis in die Umfangsrille 2 oder bis in eine Querrille 5 hinein erstrecken und dort münden. Die Feineinschnitte 7 sind jeweils längs einer unter einem Neigungswinkel β zur axialen Richtung A des Fahrzeugluftreifens geradlinig erstreckten Linien 8 erstreckt wellenförmig oder zickzackförmig verlaufend ausgebildet, wobei die Linie 8 jeweils die Nulllinie der Wellen- bzw. Zickzackform des Feineinschnitts 7 bildet.

Der Neigungswinkel β ist mit 0°≤ β ≤ 10° ausgebildet.

In Fig. 1 ist der Feineinschnitt 7 zickzackförmig mit längs der Erstreckung seiner Nulllinie 8 in alternierender Abfolge hintereinander angeordneten Bergabschnitten 9 und Talabschnitten 10 ausgebildet. Wie in Fig. 1 dargestellt ist die Zickzackform jeweils mit einer Amplitude a ausgebildet, welche den maximalen Abstand des Feineinschnittes 7 in der Position des Gipfelpunktes im Bergabschnitt 9 und den maximalen Abstand der Position der Talsohle im Talabschnitt 10 von der Nulllinie 8 angibt. Im dargestellten Ausführungsbeispiel ist der Gipfel und die Talsohle jeweils als Plateau ausgebildet, so dass sich der Maximalwert der Amplitude a jeweils längs eines Erstreckungsabschnittes e des Feineinschnittes 7 aufrechterhalten ist.

In einer anderen nicht dargestellter Ausführungsform ist die Zickzackform mit spitzen Zickzackkonturen ausgebildet, so dass der Wert der Amplitude a und somit der Gipfel bzw. die Talsohle jeweils nur in einem Punkt eines Berges bzw. in einem Punkt eines Tales ausgebildet ist.

Wie in den Figuren 1 bis 4 dargestellt ist, ist jeweils ausgehend vom Gipfel des Berges des Feineinschnitts 7, welcher die Position der Amplitude a angibt, in einer Erstreckungsrichtung senkrecht zur Erstreckungsrichtung der Nulllinie 8 des zickzackförmigen Verlaufes in dem vom Bergabschnitt 9 des Feineinschnitts 7 begrenzten Profilelementabschnitt des Profilblockelementes 4 das Profilblockelement 4 mit einer Vertiefung 11 ausgebildet. Die Vertiefung 11 erstreckt sich längs des Feineinschnittes 7 zwischen einer senkrecht zur Erstreckungsrichtung der Nulllinie 8 bis in einen Abstand L₁ parallel zur Nullinie ausgebildeten Linie und dem Gipfel des Bergabschnitts 9. Die Vertiefung 11 ist in radialer Richtung R nach innen durch einen Vertiefungsgrund 14 begrenzt, welcher sich längs der gesamten Erstreckung der Vertiefung 11 in einem in radialer Richtung R des Fahrzeugluftreifens gemessenen Abstands T₂ von der radial äußeren Oberfläche 6 erstreckt. Im Abstand L₁ vom Gipfel des Bergabschnittes 9 des Feineinschnitts 7 erstreckt sich jeweils parallel zur Nulllinie 8 eine Vertiefungswand 12, welche sich ausgehend vom Vertiefungsrund 14 in radialer Richtung R nach außen hin bis zur radial äußeren Oberfläche 6 erstreckt. Die Vertiefungswand 12 erstreckt sich im Abstand L₁ vom Gipfel des Bergabschnittes 9 parallel zur Nulllinie 8 zwischen dem in Fig.1 jeweils links eines Gipfels ausgebildeten von der Nulllinie 8 in Richtung Gipfel hin ansteigenden Abschnitt des Bergabschnitts 9 des Feineinschnitts 7 und dem rechts vom Gipfel dargestellten in Richtung Nulllinie 8 hin abfallenden Abschnitt des Bergabschnitts 9 des Feineinschnitts 7. Die Vertiefung 11 ist somit vom Feineinschnitt 9 und der Wand 12 begrenzt. Die Vertiefungswand 12 und somit auch die Vertiefung 11 erstreckt sich in der radial äußeren Oberfläche 6 somit über eine in Erstreckungsrichtung der Nullinie gemessene Länge B₁, welche größer ist als der Erstreckungsabschnitt e.

Der Abstand L₁ ist mit L₁ ≤ a ausgebildet. L₁ ist mit 0,5 mm ≤ L₁ ≤ 3mm ausgebildet.

Ausgehend von der Vertiefung 11 ist in Richtung senkrecht zur Erstreckungsrichtung der Nulllinie 8 und somit senkrecht zur Haupterstreckungsrichtung des Feineinschnitts 7 in der radial äußeren Oberfläche 6 eine über eine Erstreckungslänge L₂ erstreckte Nut 13 ausgebildet. Die Nut 13ist in der Position der Vertiefungswand 12 in der radial äußeren Oberfläche 6 mit ihrer maximale Breite B₂ ausgebildet, welche in der radial äußeren Oberfläche 6 längs der Erstreckung bis zum Erstreckungsende im Abstand L₂ zu der Vertiefungswand 12 kontinuierlich abnimmt und dort den Wert 0mm erreicht. Die Nut 13 ist in radialer Richtung R des Reifens nach innen hin durch einen Nutgrund 15 begrenzt. Der Nutgrund 15 ist ausgehend von seiner in der Position der Vertiefungswand 12 ausgebildeten maximalen, in radialer Richtung R gemessenen Abstand T₂ zur radial äußeren Oberfläche 6 mit längs der Erstreckung der Nut 13 über die Erstreckungslänge L₁ kontinuierlich abnehmendem Abstand zur radial äußeren Oberfläche 6 ausgebildet und erreicht im Abstand L₂ von der Vertiefungswand 12 seinen minimalen Wert von 0mm.

In dem in den Figuren 1, 2, 3 und 4 dargestellten Ausführungsbeispiel ist die Nut 13 beiderseits des Nutgrundes 15 jeweils von einer Nutwand 19 und einer Nutwand 20 begrenzt. Die Nutwände 19 und 20 erstrecken sich jeweils ausgehend vom Nutgrund 15 bis zur radial äußeren Oberfläche 6 des Profilblockelementes 4 erstreckt. Im dargestellten Ausführungsbeispiel schneiden sich die Nutwände 19 und 20 im Nutgrund 15 und bilden mit ihrer Schnittlinie den linienförmig erstreckten Nutgrund 15.

Die Breite B₂ der Nut 13 ist mit B₂ ≤ (1/3)B₁ ausgebildet.
Die Breite B₁ ist mit 2 mm ≤ B₁ ≤ 10mm ausgebildet.
Die Tiefe T₂ ist mit T₂ ≤ (1/3)T₁ ausgebildet, wobei T₁ die maximale Tiefe des Feineinschnitts 7 im Erstreckungsbereich der Zickzack- oder Wellenform angibt.

Die Erstreckungslänge L₂ ist mit L₁ ≤ L₂ ≤ (10 L₁) ausgebildet.
Die Tiefe T₁ ist mit T₁ ≤ 3mm ausgebildet.

Analog zur Ausbildung im Bereich der Berge 9 der Zickzack- oder Wellenform ist jeweils längs der Erstreckung des Feineinschnittes 7 im Erstreckungsabschnitt eines Tales 10 der Zickzack- oder Wellenform jeweils eine analog ausgebildete Vertiefung 11 mit analog ausgebildeter Nut 13 ausgebildet.

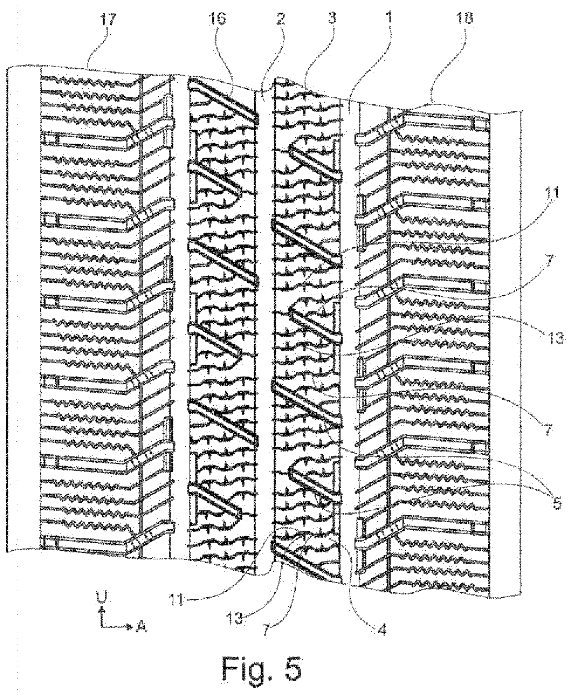

Fig. 5 zeigt einen Ausschnitt eines Laufstreifenprofiles eines PKW-Reifens mit mehreren in axialer Richtung A des Reifens nebeneinander angeordneten und jeweils durch Umfangsrillen voneinander beabstandeten Profilblockreihen 17,18,16 und 3. In Fig. 5 sind im Bereich der beiden Reifenschultern jeweils Schulterprofilblockreihen 17 bzw. 18 bekannter Art ausgebildet. Zwischen den beiden Schulterprofilblockreihen 17 und 18 sind im dargestellten Ausführungsbeispiel zwei Profilblockreihen 3 und 16 angeordnet ausgebildet. Die Profilblockreihe 3 ist in axialer Richtung A von der Schulterprofilblockreihe 18 durch eine Umfangsrille 1 und von der Profilblockreihe 16 durch eine Umfangsrille 2 getrennt ausgebildet. Die Profilblockreihe 16 ist von der Schulterprofilblockreihe 17 ebenfalls durch eine Umfangsrille getrennt ausgebildet. Im dargestellten Ausführungsbeispiel ist die Profilblockreihe 3 aus in Umfangsrichtung U hintereinander angeordneten Profilblockelementen 4, welche durch Querrillen 5 voneinander beabstandet sind, ausgebildet. Die Profilblockelemente 4 sind - wie in den Figuren 1 bis 4 dargestellt und oben beschrieben - an ihrer radial äußeren Oberfläche 6 mit zickzackförmig längs einer geradlinig erstreckten Nulllinie 8 erstreckt verlaufenden Feineinschnitte 7 ausgebildet. Ausgehend von den Gipfeln bzw. Talsohlen der Feineinschnitte 7 sind - wie in den Figuren 1 bis 4 dargestellt und oben beschrieben - Vertiefungen 11 mit Nuten 13 ausgebildet.

Figur 5 zeigt dabei ein Ausführungsbeispiel, bei welchem in der Profilblockreihe 3 nur jede zweite Querrille 5 vollständig zwischen Umfangsrille 1 und Umfangsrille 2 erstreckt ausgebildet ist und in beide Umfangsrillen 1 und 2 mündet. Die jeweils zwischen diesen beiden Querrillen 5 ausgebildeten Querrillen 5 erstrecken sich ausgehend von der Umfangsrille 1 lediglich bis in die Nähe der Umfangsrille 2 und enden jedoch mit Abstand von der Umfangsrille 2.

Fig. 5 zeigt auch ein Ausführungsbeispiel, bei dem auch die Profilblockreihe 16 in analoger Weise mit Profilblockelementen mit zickzackförmig längs geradliniger Nulllinien 8 erstreckt ausgebildeten Feineinschnitten 7 mit entsprechenden Vertiefungen 11 und Nuten 13 ausgebildet sind. Die Profilblockreihen 17 und 18 sind in herkömmlicher Weise mit wellenförmigen Feineinschnitten ausgebildet.

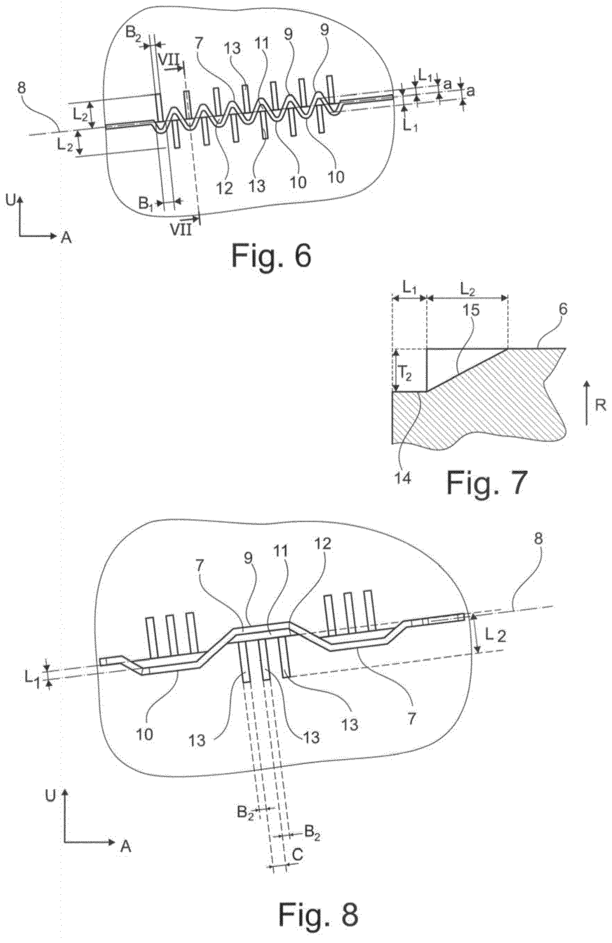

Die Figuren 6 und 7 zeigen eine alternative Ausführungsform der in den Figuren 1 bis 4 dargestellten Feineinschnitte 7. Fig. 6 zeigt dabei einen Feineinschnitt 7, der sinuswellenförmig längs einer als Nulllinie der Sinuswellenform ausgebildeten geradlinigen Erstreckungslinie 8 erstreckt verlaufend ausgebildet ist mit Wellenbergen 9 und Wellentälern 10.

Die Figuren 6 und 7 zeigen eine weitere Ausführungsform des in den Figuren 1 bis 4 dargestellten Ausbildung, bei welcher die Nut 13 längs ihrer gesamten Erstreckung über die Erstreckungslänge L₂ hinweg mit konstanter Breite B₂ ausgebildet ist. In dieser Ausführung ist der Nutgrund 15 längs seiner gesamten Erstreckung ebenfalls mit der Breite B₂ ausgebildet.

Fig. 8 zeigt ein anderes alternatives Ausführungsbeispiel der in den Figuren 1 bis 4 dargestellten Ausführung. Bei dem in der Fig. 8 dargestellten Ausführung sind längs der Erstreckung der Vertiefungswand 12 in der radial äußeren Oberfläche 13 mehrere Nuten 13 jeweils mit Abstand C zueinander verteilt angeordnet, welche jeweils ausgehend von der Vertiefungswand 12 über die Erstreckungslänge L₂ hinweg senkrecht zur Erstreckungsrichtung der Nulllinie 8 erstreckt ausgebildet sind. In dem in Fig.8 dargestellten Ausführungsbeispiel sind die Nuten 13 dabei wie in den Figuren 6 und 7 mit konstanter Breite B₂ ausgebildet. In anderer - nicht dargestellter - Ausführung sind die Nuten 13 - wie in den Figuren 1 bis 4 dargestellt - mit ausgehend von der Vertiefungswand 12 bis zu ihrem Erstreckungsende jeweils kontinuierlich abnehmender Breite ausgebildet.

### Bezugszeichenliste

- 1: Umfangsrille
- 2: Umfangsrille
- 3: Profilblockreihe
- 4: Profilblockelement
- 5: Querrille
- 6: Radial äußere Oberfläche
- 7: Feineinschnitt
- 8: Nulllinie
- 9: Berg
- 10: Tal
- 11: Vertiefung
- 12: Vertiefungswand
- 13: Nut
- 14: Vertiefungsgrund
- 15: Nutgrund (Rampe)
- 16: Profilblockreihe
- 17: Schulterprofilblockreihe
- 18: Schulterprofilblockreihe
- 19: Wand
- 20: Wand

## Patentansprüche

1. Laufstreifenprofil eines Fahrzeugluftreifens mit radial erhabenen Profilelementen (4), die in radialer Richtung R des Reifens **von einer die Bodenkontaktoberfläche bildenden, radial äußeren Oberfläche (6)** begrenzt werden, und mit in Profilelementen (4) ausgebildeten wellenförmig- oder zickzackförmig verlaufenden Feineinschnitten (7) mit einer in der radial äußeren Oberfläche (6) die Haupterstreckungsrichtung des jeweiligen Feineinschnitts bildenden Nulllinie (8) der Wellen- bzw. Zickzackform, deren größte Richtungskomponente die axiale Richtung A des Reifens ist, wobei die Wellenform bzw. Zickzackform längs der Erstreckung der Nulllinie (8) in alternierender Abfolge angeordnet ausgebildete Berge (9) und Täler (10) mit Amplitude a aufweist, und wobei die Feineinschnitte (7) zumindest längs ihrer Wellen- oder Zickzackförmigen Erstreckung mit einer in radialer Richtung R gemessenen Tiefe T₁ ausgebildet sind,
**wobei im Erstreckungsbereich zumindest einzelner** - **insbesondere aller** - **Wellenberge (9) und/oder zumindest einzelner** - **insbesondere aller** - **Wellentäler (10) des Feineinschnitts (7) jeweils ein vom Feineinschnitt (7) begrenzter Profilabschnitt, der sich ausgehend Gipfel (Maximum) des Wellenberges (9) bzw. vom Tiefpunkt (Minimum) des Wellentals (10) in Richtung senkrecht zur Nulllinie (8) hin bis in den Abstand L₁ vom Gipfel (Maximum) des Wellenberges (9) bzw. vom Tiefpunkt (Minimum) des Wellentals (10) mit L₁≤a erstreckt als Vertiefung (11) mit längs der Erstreckung konstanter Tiefe T₂** - **gemessen in radialer Richtung R ausgehend von der radial äußeren Oberfläche (6)** - **ausgebildet ist,**
**dadurch gekennzeichnet,**
**dass T₂** mit T₂≤ T₁(1/3) ausgebildet ist,
**dass die Vertiefung (11) längs eines im Abstand L₁ vom Gipfel bzw. vom Tiefpunkt zwischen den beiden Schnittpunkten der im Abstand L₁ vom Gipfel bzw. vom Tiefpunkt gebildeten Geraden mit dem Feineinschnitt (7) ausgebildeten Strecke (12) der Länge B₁ mit 2mm ≤ B₁≤ 10mm, stufenartig zur radial äußeren Oberfläche (6) angehoben ist, und**
**dass längs der Strecke (12) ausgehend von der Position der Strecke (12) im Abstand L₁ vom Gipfel bzw. vom Tiefpunkt wenigstens eine senkrecht zur Strecke (12) in der radial äußeren Oberfläche (6) ausgerichtete und vom Gipfel bzw. vom Tiefpunkt wegweisend erstreckt ausgebildete Nut (13) der Erstreckungslänge L₂ mit L₁≤L₂≤ (10L₁) ausgebildet ist, die in radialer Richtung nach innen hin von einem Nutgrund (15) begrenzt ist, welcher längs der Erstreckung der Nut (13) ausgehend von einer Tiefe T₂ in der Position der Strecke (12) kontinuierlich bis zum Erstreckungsende rampenförmig radial ansteigend ausgebildet ist.**

2. Laufstreifenprofil gemäß den Merkmalen von Anspruch **1,**
wobei längs der Strecke (12) ausgehend von der Position der Strecke (12) im Abstand L₁ vom Gipfel bzw. vom Tiefpunkt mehrere jeweils voneinander beabstandete senkrecht zur Strecke (12) in der radial äußeren Oberfläche (6) ausgerichtete und vom Gipfel bzw. vom Tiefpunkt wegweisend erstreckte Nuten (13) ausgebildet sind.

3. Laufstreifenprofil gemäß den Merkmalen von Anspruch **1** oder **2,**
wobei der Nutgrund (15) im Erstreckungsende der Nut (13) die radial äußere Oberfläche schneidet.

4. Laufstreifenprofil gemäß den Merkmalen von Anspruch **1,**
wobei die Nut (13) mit einer in der radial äußeren Oberfläche (6) gemessenen Breite B₂ ausgebildet ist, die längs ihrer Erstreckung ausgehend von der Position der Strecke (12) bis zum Erstreckungsende konstant ausgebildet ist.

5. Laufstreifenprofil gemäß den Merkmalen von Anspruch **1** oder **2,**
wobei die Nut (13) mit einer in der radial äußeren Oberfläche (6) gemessenen Breite B₂ ausgebildet ist, die längs ihrer Erstreckung ausgehend von der Position der Strecke (12) bis zum Erstreckungsende stetig - insbesondere kontinuierlich - abnehmend ausgebildet ist.

6. Laufstreifenprofil gemäß den Merkmalen von einem der vorangegangenen Ansprüche,
wobei die in der radial äußeren Oberfläche (6) gemessene Breite B₂ der Nut (12) mit B₂≤ (1/3)B₁ ausgebildet ist.

7. Laufstreifenprofil gemäß den Merkmalen von einem der vorangegangenen Ansprüche,
wobei der Abstand L₁ mit 0,5mm≤L₁≤ 3mm ausgebildet ist.

## Claims

1. Tread profile of a pneumatic vehicle tyre with radially raised profile elements (4), which are delimited in the radial direction R of the tyre by a radially outer surface (6) forming the ground contact surface, and with wave-shaped or zigzag-shaped sipes (7) formed in profile elements (4) and having a zero line (8) of the wave shape or the zigzag shape which forms the main direction of extent of the respective sipe in the radially outer surface (6) and the greatest directional component of which is the axial direction A of the tyre, wherein the wave shape or zigzag shape has along the extent of the zero line (8) crests (9) and troughs (10) of amplitude a, which are formed as arranged in alternating sequence, and wherein the sipes (7) are formed at least along their wave-shaped or zigzag-shaped extent with a depth T₁, measured in the radial direction R, wherein, in the region of extent of at least some - in particular all - of the wave crests (9) and/or at least some - in particular all - of the wave troughs (10) of the sipe (7), in each case one profile portion delimited by the sipe (7) that extends from the apex (maximum) of the wave crest (9) or from the low point (minimum) of the wave trough (10) in a direction perpendicular to the zero line (8) to the distance L₁ from the apex (maximum) of the wave crest (9) or from the low point (minimum) of the wave trough (10), with L₁ ≤ a, is formed as a depression (11) with a constant depth T₂ - measured in the radial direction R - along the extent, from the radially outer surface (6), **characterized**
**in that** T₂ is formed with T₂ ≤ T₁ (1/3),
**in that** the depression (11) is raised in a step-like manner with respect to the radially outer surface (6) along a path (12) of the length B₁, with 2 mm ≤ B₁ ≤ 10 mm, formed by the sipe (7) at the distance L₁ from the crest or from the low point between the two points of intersection of the straight line formed at the distance L₁ from the crest or from the low point, and in that along the path (12), from the position of the path (12) at the distance L₁ from the crest or from the low point, there is formed at least one groove (13) of the length of extent L₂, with L₁ ≤ L₂ ≤ (10L₁), which is aligned perpendicularly to the path (12) in the radially outer surface (6) and made to extend away from the crest or from the low point and which is delimited inwardly in the radial direction by a groove base (15), which is formed rising radially in the form of a ramp along the extent of the groove (13), from a depth T₂ at the position of the path (12) continuously up to the end of the extent.

2. Tread profile according to the features of Claim 1,
wherein along the path (12), from the position of the path (12) at the distance L₁ from the crest or from the low point, there are formed a number of grooves (13), which are respectively spaced apart from one another, aligned perpendicularly to the path (12) in the radially outer surface (6) and made to extend away from the crest or from the low point.

3. Tread profile according to the features of Claim 1 or 2,
wherein the groove base (15) intersects the radially outer surface at the end of the extent of the groove (13) .

4. Tread profile according to the features of Claim 1,
wherein the groove (13) is formed with a width B₂, measured in the radially outer surface (6), which is formed as constant along its extent, from the position of the path (12) to the end of the extent.

5. Tread profile according to the features of Claim 1 or 2,
wherein the groove (13) is formed with a width B₂, measured in the radially outer surface (6), which is formed as decreasing steadily - in particular continuously - along its extent, from the position of the path (12) to the end of the extent.

6. Tread profile according to the features of one of the preceding claims,
wherein the width B₂, measured in the radially outer surface (6), of the groove (12) is formed with B₂ ≤ (1/3) B₁.

7. Tread profile according to the features of one of the preceding claims,
wherein the distance L₁ is formed with 0.5 mm ≤ L₁ ≤ 3 mm.

## Revendications

1. Profil de bande de roulement d'un pneumatique de véhicule comprenant des éléments profilés rehaussés radialement (4) qui sont limités dans la direction radiale R du pneu par une surface radialement extérieure (6) formant la surface de contact avec le sol, et comprenant de fines entailles (7) s'étendant sous forme ondulée ou en zigzag, réalisées dans des éléments profilés (4), avec une ligne zéro (8) de la forme ondulée et/ou en zigzag constituant, dans la surface radialement extérieure (6), la direction d'étendue principale de la fine entaille respective, dont la plus grande composante directionnelle est la direction axiale A du pneu, la forme ondulée et/ou en zigzag présentant des sommets (9) et des vallées (10) d'amplitude a réalisés de manière disposée le long de l'étendue de la ligne zéro (8) et en succession en alternance, et les fines entailles (7) étant réalisées au moins le long de leur étendue de forme ondulée ou en zigzag avec une profondeur T₁ mesurée dans la direction radiale R,
à chaque fois une portion profilée limitée par la fine entaille (7), qui s'étend à partir du point culminant (maximum) du sommet d'ondulation (9) ou à partir du point le plus bas (minimum) de la vallée d'ondulation (10) dans la direction perpendiculaire à la ligne zéro (8) jusque qu'à la distance L₁ du point culminant (maximum) du sommet d'ondulation (9) ou du point le plus bas (minimum) de la vallée d'ondulation (10), avec L₁ ≤ a, étant réalisée, dans la région d'étendue au moins de sommets d'ondulations (9) individuels - notamment de tous les sommets d'ondulations - et/ou au moins de vallées d'ondulations (10) individuelles - notamment de toutes les vallées d'ondulations - de la fine entaille (7), en tant que renfoncement (11) avec une profondeur T₂ constante le long de l'étendue - mesurée dans la direction radiale R à partir de la surface radialement extérieure (6), **caractérisé en ce que**
T₂ est réalisé avec T₂ ≤ T₁ (1/3),
**en ce que** le renfoncement (11) est rehaussé sous forme étagée vers la surface radialement extérieure (6) le long d'une section (12) de longueur B₁, telle que 2 mm ≤ B₁ ≤ 10 mm, réalisée à la distance L₁ du point culminant ou du point le plus bas entre les deux points d'intersection des droites formées à la distance L₁ du point culminant ou du point le plus bas avec la fine entaille (7), et
**en ce qu'**au moins une rainure (13) orientée perpendiculairement à la section (12) dans la surface radialement extérieure (6) et réalisée de manière à s'étendre à l'écart du point culminant ou du point le plus bas, étant réalisée le long de la section (12), à partir de la position de la section (12) à la distance L₁ du point culminant ou du point le plus bas, avec une longueur d'étendue L₂, avec L₁ ≤ L₂ ≤ (10L₁), laquelle rainure est limitée dans la direction radiale vers l'intérieur par un fond de rainure (15) qui est réalisé de manière à monter radialement en forme de rampe en continu jusqu'à l'extrémité d'étendue le long de l'étendue de la rainure (13) à partir d'une profondeur T₂ dans la position de la section (12).

2. Profil de bande de roulement selon les caractéristiques de la revendication 1, dans lequel plusieurs rainures (13) s'étendant à l'écart du point culminant ou du point le plus bas, à chaque fois espacées les unes des autres et orientées perpendiculairement à la section (12) dans la surface radialement extérieure (6), sont réalisées le long de la section (12), à partir de la position de la section (12) à la distance L₁ du point culminant ou du point le plus bas.

3. Profil de bande de roulement selon les caractéristiques de la revendication 1 ou 2, dans lequel le fond de rainure (15) coupe la surface radialement extérieure dans l'extrémité d'étendue de la rainure (13).

4. Profil de bande de roulement selon les caractéristiques de la revendication 1, dans lequel la rainure (13) est réalisée avec une largeur B₂, mesurée dans la surface radialement extérieure (6), qui est réalisée de manière constante le long de son étendue à partir de la position de la section (12) jusqu'à l'extrémité d'étendue.

5. Profil de bande de roulement selon les caractéristiques de la revendication 1 ou 2, dans lequel la rainure (13) est réalisée avec une largeur B₂, mesurée dans la surface radialement extérieure (6), qui est réalisée de manière à diminuer - notamment en continu - le long de son étendue à partir de la position de la section (12) jusqu'à l'extrémité d'étendue.

6. Profil de bande de roulement selon les caractéristiques de l'une des revendications précédentes, dans lequel la largeur B₂ de la rainure (12), mesurée dans la surface radialement extérieure (6), est réalisée avec B₂ ≤ (1/3)B₁.

7. Profil de bande de roulement selon les caractéristiques de l'une des revendications précédentes, dans lequel la distance L₁ est réalisée avec 0,5 mm ≤ L₁ ≤ 3 mm.
